# EUROPEAN PATENT APPLICATION

(11) **EP 1 882 717 A1**
(43) Date of publication of application: **30.01.2008**
(21) Application number: 06015749.2
(22) Date of filing: 28.07.2006
(51) Int. Cl.: C08L 53/00, C08K 5/00, C08G 63/183, C08G 63/85, C08L 67/02, H01B 3/42, C08F 290/00

(54) **Toughened halogen free flame retardant polyester composition**

(71) Applicant: DSM IP Assets B.V., 6411 TE Heerlen (NL)
(72) Inventor: Janssen, Robert Hendrik Catharina, 6191 PC BEEK (NL); Walet, Monique Anna Maria, 6141 LR Limbricht (NL)
(74) Representative: van der Ploeg, Antonius Franciscus M.J.

(57) **Abstract**

The invention relates to halogen free flame retardant thermoplastic polymer composition comprising a halogen free flame retardant system, a thermoplastic polyester and an amount of 1-20 wt.% of soft blocks chemically bonded to the thermoplastic polyester. The invention also relates to the use of the halogen free flame retardant thermoplastic polymer composition for making fibres, films and injection or extrusion moulded parts.

## Description

The invention relates to a halogen free flame retardant polyester composition comprising a thermoplastic polyester and a halogen free flame retardant system. The invention in particular relates to halogen free flame retardant polyester compositions that can be used for making structural parts that can be used in electrical and electronic applications, especially lamp parts.

The market of thermoplastic polymer compositions for use in electrical and electronic applications has relied upon flame retardant composition comprising halogen containing flame retardants for many years. For various reasons, the acceptance of halogen containing flame retardants has changed quite dramatically in the last years and as a consequence thereof the market interest in halogen free alternatives has significantly increased. This also holds for halogen free flame retardant polyester compositions.

Such a composition is known from DE-19827845-A1. This known composition comprises a thermoplastic polyester and a halogen free flame retardant system comprising a combination of a nitrogen compound, an inorganic phosphor compound and an organic phosphor compound, each of which must be present in an amount of 1-30 wt.%, relative to the total composition. According to DE-19827845-A1, there are 4 groups of halogen free flame retardants that can in principle be used in thermoplastic materials: inorganic flame retardants, nitrogen containing flame retardants like melamine cyanurate, phosphor containing flame retardants, and phosphor-and-nitrogen containing flame retardants. Also according to DE-19827845-A1, each of these groups, has its own disadvantage or disadvantages, being that they either only work in very high amounts (the inorganic flame retardants) or don't work at all in polyesters (the phosphor containing flame retardants) or do not work in polyesters when used alone (nitrogen containing flame retardants). Next to that there are problems with mechanical properties, in particular for compositions comprising less than 10% reinforcement agent, problems with processing, and migration and blooming problems. As said before the known composition of DE-19827845-A1 comprises a combination of three flame retardant compounds. The examples in DE-19827845-A1 typically comprise 45 wt.% polyester, such as polybutylene terephthalate (PBT) and polyethylene terephthalate (PET), 25 wt.% of the said flame retardant combination, and 30 wt.% of glass fiber reinforcement. DE-19827845-A1 does not comprise examples with lower glass fiber content, or even without glass fibers.

It has been experienced by the inventors that for several applications glass fiber reinforcement cannot be used in such a high amount of 30 wt.%, or even not at all, without impairing the flow properties while in other specific cases even higher amounts of flame retardants than 25 wt.% are needed. For example, it had been found that nitrogen containing compounds, such as melamine cyanurate, used as primary flame retardant in non-reinforced polyester compositions in fairly high amounts can provide good flame retardancy properties. However, it was also experienced that such polyester compositions comprising less reinforcement agent and / or more flame retardant suffer from poor mechanical properties. In particular compositions without reinforcement agent and with a high flame retardant content, although having sufficient stiffness for use in structural parts, are too brittle and show too low an elongation-at-break for such applications.

The aim of the invention is therefore to toughen the flame retardant polyester composition, i.e. to provide a polyester composition that is free of halogens, has good flame retardant properties and has improved mechanical properties in terms of improved ductility and elongation-at-break in combination with retention of sufficient stiffness and strength.

This aim has been achieved with the flame retardant thermoplastic polyester composition according to the invention, wherein the composition comprises 1-20 wt.% soft blocks chemically bonded to the thermoplastic polyester, relative to the total weight of the thermoplastic polyester and the soft blocks. The effect of thermoplastic polyester in the composition according to the invention comprising 1-20 wt.% soft blocks chemically bonded to the thermoplastic polyester, is that the ductility and elongation-at-break of the composition is improved, meanwhile retaining good mechanical properties in terms of sufficient stiffness and strength while the flame retardant properties are affected only in slight extent and retained at a good level. A further effect is that in particular cases the content in flame retardant system may be further increased, thereby obtaining improved flame retardant properties, meanwhile retaining an elongation-at-break higher than the elongation-at-break of the unmodified reference flame retardant composition with the lower flame retardant content.

This effect is surprising also in view of DE-19827845-A1, which mentions that the flame retardant polyester composition might comprise a rubber elastomer, which can be used in amounts of for example 40 wt.% (DE-19827845-A1, page 8 line 63-page 11 line 48). Such polymers are generally used as tougheners for plastic compositions, and, as cited in DE-19827845-A1, are described for example in Houben-Weyl, Methoden der organischen Chemie, Bd 14/1 (Georg-Thieme Verlag, Stuttgart, 1061), page 392-406, and in the "Toughened Plastic" by C.B. Bucknall (Applied Scientific Publishers, London, 1977). As was found by the inventors, such rubber elastomer has a limited effect on the impact properties of the halogen free flame retardant polyester composition with high flame retardant content and low-to-no glass fiber reinforcement content, has less good an effect on the elongation properties thereof compared to the effect of the copolymerized soft blocks according to the invention, while at the same time has a dramatic negative effect on the flame retardant properties, even when used at amounts far below 40 wt.%.

With the term soft block is herein understood a structural element or component of a polymer that provides the polymer with an amorphous polymeric phase having a low glass transition temperature. Likewise, the polymeric phase with the low glass transition temperature results from the soft blocks forming a separate phase, while the glass transition temperature (Tg) will generally be close to the softening point of the soft block. For this reason, the Tg of the amorphous polymeric phase will be denoted herein as the Tg of the soft blocks.

Suitably, the soft blocks copolymerized within the thermoplastic polyester in the composition according to the invention has a Tg of at most 0°C, preferably at most -20°C, more preferably at most -30°C and most preferably -40°C - -60°C.

With the term "thermoplastic polyester" is herein understood a polymer consisting essentially of residual structural elements of diacids and diols, as represented by formula I:

HO - [- {-C(O)-R¹-C(O)-} - {O-R²-O-} - ]ₙ - H (1)

wherein -C(O)-R¹-C(O)- denotes a residual structural element of a dicarboxylic acid and -O-R²-O- denotes a residual structural element of a diol.

Such polyesters can be prepared by polycondensation of diacids, or ester derivatives thereof, and diols, using processes well known in the art. Next to the diacids or ester derivatives thereof and the diols, optionally small amounts of other components, including monofunctional and trifunctional alcohols and trifunctional carboxylic acids, can be used during the polycondensation, and residual structural elements thereof can be present in the thermoplastic polymer, provided that these polyesters remain melt processable.

The thermoplastic polyester that is used in the composition according to the invention, suitably is an amorphous polyester or a semi-crystalline polyester. The thermoplastic polyester is typically an amorphous polyester having a glass transition temperature (Tg) or a semi-crystalline polyester having a melting temperature (Tm), wherein Tg, respectively Tm are well above room temperature, preferably above 150°C, and more preferably above 180°C. Tg, respectively Tm may as well be above 250°C, and even as high as or even higher than 300°C. The thermoplastic polyester can therefore also be considered as a hard polyester, this in contrast with the soft blocks having a low Tg.

Preferably, the thermoplastic polyester is a semicrystalline polyester with a melting temperature Tm of in the range of 200°C-300°C, more preferably 220°C-250°C. A higher minimum value for Tg, or Tm provides for a wider temperature application range for moulded products made from the invention composition, whereas a lower maximum value for Tg, or Tm, as well as semicrystalline polyester provide for better processing properties and better mechanical properties in terms of elongation over the said application range.

It is noted that with the term melting temperature is herein understood the temperature, measured by DSC with a heating rate of 10°C/min, falling in the melting range and showing the highest melting rate.

Analogously, with the term glass transition temperature is herein understood the temperature, measured by DSC with a heating rate of 10°C/min, falling in the glass transition range and showing the highest glass transition rate.

More preferably the thermoplastic polyester is a semi-crystalline semi-aromatic polyester. Said semi-crystalline semi-aromatic polyester is generally derived from at least one aromatic dicarboxylic acid or an ester-forming derivative thereof, and at least one alkylene diols and/or aromatic diol, and includes homo- as well as copolymers. Such a semi-aromatic polyester is represented by formula I, wherein R¹ represents an aromatic group and wherein R² represents an alkylene or an aromatic group.

Examples of suitable aromatic diacids include terephthalic acid, isophthalic acid, naphthalene dicarboxylic acid, biphenyl dicarboxylic acid, etc., with terephthalic acid being preferred. Suitable alkylene diols include both aliphatic diols and (cyclo)aliphatic for diols. Suitable aromatic diols are, for example, hydroquinone, dihydroxyphenyl, naphthalene diol. Alkylene diols, like ethylene diol, propylene diol, 1,4-butylene diol or butane diol, neopentyldiol, and cyclohexane dimethanol are preferred.

These semi-aromatic polymers may further comprise small amounts of, for example, aliphatic dicarboxylic acids, mono functional alcohols and / or carboxylic acids and three or higher functional alcohols and / or carboxylic acids. Preferably, the content of other components in these polyesters is below 20 wt.%, below 10 wt.%, more preferably below 5 wt.%, relative to the total weight of the polyester, to ensure the semi-crystallinity of the polyester.

More preferably, the "hard" thermoplastic polyester in the flame retardant polyester composition according to the invention is a semi-aromatic polyester consisting of residual structural elements of diacids, diols and optionally small amounts of mono- and/or trifunctional components, wherein the residual structural elements of the diacids are derived for at least 90 wt.%, relative to the total weight of the residual structural elements of the diacids, of aromatic diacids and the residual structural elements of the diols are derived for at least 90 wt.%, relative to the total weight of the residual structural elements of the diols, of short chain alkylene diols with 2-6 C-atoms.

Suitable semi-aromatic thermoplastic polyesters that can be used in the composition according to the invention are, for example, polyalkyleneterephthalates, polyalkylene naphthalates, and polyalkylene bisbenzoates and any copolymers and any mixtures thereof. These polyesters can be derived from alkylene diols and, respectively terephthalic acid, naphthalene dicarboxylic acid and 4,4'-diphenyldicarboxylic acid.

Suitably, the polyalkyleneterephthalate is poly(1,4-cyclohexanedimethylene terephthalate) (PCT) or a poly(alkylene terephthalate) based on an aliphatic diol with 2 to 6 carbon atoms, like polyethyleneterephthalate (PET), polytrimethyleneterephthalate (PTT), and poly(1,4-butylene terephthalate) or simply called polybutylene terephthalate (PBT).

Suitable poly(alkylene naphthalate)s include polyethylenenaphthalate (PEN) and polybutylenenaphthalate (PBN). Suitable polyalkylene bisbenzoates include polyethylenebisbenzoate (PEBB) and polybutylenebisbenzoate (PBBB). Suitably, these semi-aromatic thermoplastic polyesters comprise a minority content of another dicarboxylic acid or diol.

Of these polyesters, PET, PTT, PBT, PEN, PTN, PBN, and any mixture or copolymer thereof are preferred. More preferably the thermoplastic polyester comprises PBT or even consists essentially or even completely of PBT, since PBT provides an optimal combination mechanical properties, flame retardancy, processability and economics.

With the term "chemically bonded to" in the expression "soft blocks chemically bonded to the thermoplastic polyester" is understood herein that the soft blocks are not merely blended with the "hard" thermoplastic polyester, but form an integral part thereof as a result of a chemical process wherein the soft blocks have been copolymerized with, or have been reacted with, the thermoplastic polyester or at least part thereof.

With the term "soft blocks chemically bonded to the thermoplastic polyester" is herein also understood that the polymer in the flame retardant thermoplastic polymer composition, other than consisting of a thermoplastic polyester modified with the said chemically bonded soft blocks in a chemical process as described above, and, optionally, other thermoplastic polymers different from the thermoplastic polyester, may also consist of a blend of a thermoplastic polyester modified with the said chemically bonded soft blocks and an unmodified thermoplastic polyester, i.e. a thermoplastic polyester not modified with soft blocks, and optionally other thermoplastic polymers different from the thermoplastic polyester.

The soft blocks can be chemically bonded to the "hard" thermoplastic polyester by ester, urethane and/or amide linkages. Soft blocks chemically bonded to thermoplastic polyester by ester, amide, urethane and/or urea linkages can be prepared by processes wherein hydroxyl functional components are reacted with carboxyl functional components (thus forming ester linkages), carboxyl functional components are reacted with amine functional components (thus forming amide linkages), hydroxyl functional components modified with diisocyanates are reacted with other hydroxyl functional components (thus forming urethane linkages), and hydroxyl functional components modified with diisocyanates are reacted with amine functional components (thus forming urea linkages), respectively.

Suitably, the soft blocks in the flame retardant thermoplastic polymer composition according to the invention consist of polymer segments derived from a compound chosen from the group consisting of long chain aliphatic dicarboxylic acids, long chain aliphatic diols, long chain aliphatic diamines, polyether diamines, polyether glycols, soft polyesters and soft polycarbonates, and mixtures thereof.

The long chain aliphatic diacid from which the soft segments may be derived, may be any aliphatic diacid which is able to phase separate from the hard block polyester segments, thus providing the copolyester elastomer with elastomeric properties.

Examples of suitable long chain aliphatic diacid are compounds known as dimer fatty acids, for example derived from oleic and linoleic acids. The long chain aliphatic diacids may suitably be linear or branched. Dimer fatty acids are available, for example, under trade name Pripol from Unichema, The Netherlands.

The long chain aliphatic diol from which the soft segments may be derived, may be any aliphatic polymer terminated with hydroxyl groups. Suitably, the long chain aliphatic diol is a polyene diol, for example a polybutadiene diol or a hydrogenated derivative thereof.

The long chain aliphatic diamine may be any aliphatic polymer terminated with primary amine groups. Suitably, the long chain aliphatic diol is a polyene diol, for example a polybutadiene diol or a hydrogenated derivative, wherein the hydroxyl groups have been replaced by primary amine groups.

The long chain aliphatic diacid as well as the long chain aliphatic diol and the long chain aliphatic diamine may have a number average molecular weight (Mn) varying over a large range, and which molecular weight may be as low as 400, or even lower, and as high as 2000, or even higher. Preferably the long chain aliphatic diacid, respectively the long chain aliphatic diol and the long chain aliphatic diamine, has a number average molecular weight (Mn) in the range of 500 -1200, more preferably 550-1000, or even 600-800. A higher molecular weight has the advantage that phase separation is improved and elastomeric properties are enhanced.

Suitable polyether glycols, from which the soft blocks may be derived, are, for example, polyalkylene oxide glycols. Suitably, the polyalkylene oxide glycol is a homopolymer or copolymer on the basis of oxiranes, oxetanes and/or oxolanes. Examples of suitable oxiranes, where upon the polyalkylene oxide glycol may be based, are ethylene oxide and propylene oxide. The corresponding polyalkylene oxide glycol homopolymers are known by the names polyethylene glycol, polyethylene oxide, or polyethylene oxide glycol (also abbreviated as PEG or pEO), and polypropylene glycol, polypropylene oxide or polypropylene oxide glycol (also abbreviated as PPG or PPO), respectively. An example of a suitable oxetane, where upon the polyalkylene oxide glycol may be based, is 1,3-propanediol. The corresponding polyalkylene oxide glycol homopolymer is known by the name of poly(trimethylene)glycol. An example of a suitable oxolane, where upon the polyalkylene oxide glycol may be based, is tetrahydrofuran. The corresponding polyalkylene oxide glycol homopolymer is known by the name of poly(tretramethylene)glycol (PTMG) or polytetrahydrofuran (PTHF). The polyalkylene oxide glycol copolymer can be random copolymers, block copolymers or mixed structures thereof. Suitable copolymers are, for example, ethylene oxide / polypropylene oxide block-copolymers, (or EO/PO block copolymer), in particular ethylene-oxide-terminated polypropylene oxide glycol.

The polyalkylene oxide can also be based on the etherification product of alkylene diols or mixtures of alkylene diols or low molecular weight poly alkylene oxide glycol or mixtures of the forementioned glycols.

Preferably, the polyalkylene oxide glycol used for the soft blocks in the flame retardant thermoplastic polymer composition according to the invention is selected from the group consisting of polypropylene oxide glycol homopolymers (PPG), ethylene oxide / polypropylene oxide block-copolymers (EO/PO block copolymer) and poly(tretramethylene)glycol (PTMG), and mixtures thereof. More preferably, the polyalkylene oxide glycol comprises, or even consists of a polytetramethylene oxide glycol.

Suitable polyether diamines are, for example, diamines derived from polyalkylene oxide glycols, wherein the hydroxyl end groups have been substituted by primary amine groups. Suitably, the polyether diamine is derived from on ore more polyalkylene oxide glycols as described here above for the polyether glycols. Such polyether diamines derived from polyalkylene oxide glycols are commercially available under the tradename Jeffamine.

Preferably, the polyether diamine is derived from a polyalkylene oxide glycol comprising, or even consisting of a polytetramethylene oxide glycol.

Soft polyesters from which the polyester polymer segments in the soft blocks may be derived, suitably consist of repeating units derived from at least one alkylene diol and at least one aliphatic dicarboxylic acids, and/or derived from at least one lactone and/or hydroxyl functional aliphatic carboxylic acid.

Suitable aliphatic diols include ethylene glycol, 1,4-butanediol, 1,5-pentanediol, 1,6-hexanediol, 2,2-dimethyl-1,3-propanediol, and mixtures thereof. Also other glycols, such as 1,3- or 1,4-cyclohexanediol or 1,3- or 1,4-bis(hydroxymethyl)-cyclohexane, may be incorporated into the low melting components. Under some circumstances, for instance to increase the melt viscosity of the end-product, it may be recommended to incorporate some small amount of higher functional compounds. Examples of such compounds are trimethylol ethane, trimethylol propane and hexane triol.

Preferably, the aliphatic diol in the soft polyester polymer segments comprises 1,4-butanediol, 1,5-pentanediol, 1,6-hexanediol, 2,2-dimethyl-1,3-propanediol, and mixtures thereof in an amount of at least 50 mole %, still more preferably at least 70 mole %, or even more preferably at least 90 mole%, relative to the total molar amount of aliphatic diol in the soft polyester polymer segments, or even consists for 100 % of the said aliphatic diols.

Suitable aliphatic dicarboxylic acids are, for example, adipic acid, glutaric acid, pimelic acid, suberic acid, isosebacic acid and ricinoleic acid. Also aliphatic dicarboxylic acids having hetero atoms, such as thiodipropionic acid may be used in the low melting bifunctional compounds. In addition there still may be mentioned cycloaliphatic dicarboxylic acids such as 1,3- or 1,4-cyclohexane dicarboxylic acid and terephthalic acid and isophthalic acid, which may be comprised in the soft polyester segments in small amounts.

Preferably, the dicarboxylic acid in the soft polyester polymer segments comprises adipic acid, more preferably consists for at least 50 mole %, still more preferably at least 70 mole %, or even at least 90 mole%, relative to the total molar amount of dicarboxylic acid in the soft polyester polymer segments, or even consists for 100 % of adipic acid.

The soft polycarbonates from which the polycarbonate polymer segments in the soft blocks suitably may suitably be derived from a polyalkylene carbonate comprising repeating units represented by formula II:

[-(CR ³R⁴)ₓ-O-C(O)-O-] (II),

wherein R³ and R⁴ are equal or different and are hydrogen atoms, alkyl radicals and/or aryl radicals, and x is an integer in the range of 2-20. Suitably the repeating unit is hexamethylene carbonate, i.e. R³ and R⁴ are hydrogen radicals and x is 6. Preferably, the polycarbonate polymer segments in the soft blocks consist of poly(hexamethylene carbonate).

Also suitably, the polymer segments in the soft blocks comprise or consist of a copolymer of repeating units of a soft polycarbonate and repeating units of a soft polyester. In other words, the polymer segments comprise or consist of (i) repeating units derived from at least one alkylene diol and at least one aliphatic dicarboxylic acids, and/or derived from at least one lactone and/or hydroxyl functional aliphatic carboxylic acid, and (ii) repeating units according to formula II, mentioned above, wherein R³ and R⁴ are equal or different and are hydrogen atoms, alkyl radicals and/or aryl radicals, and x is an integer in the range of 2-20. Here the repeating units can be the same described here above for the soft polycarbonates and the soft polyester, respectively.

The polyether glycol, as well as the polyether diamine, the soft polyester and the polycarbonate may have a number average molecular weight (Mn) varying over a large range, and which molecular weight may be as low as 500, or even lower, and as high as 5000, or even higher. Preferably the polyether glycol, respectively the polyether diamine, the soft polyester and the polycarbonate, has a number average molecular weight (Mn) in the range of 800 -3000, more preferably 1000-2000, or even in the range of 1200-1800. A higher molecular weight has the advantage that phase separation is improved and elastomeric properties are enhanced.

Suitable diisocyanates, which can be used for the urethane or urea linkages between the soft blocks chemically bonded to the thermoplastic composition according to the invention include aromatic diisocyanates, such as toluenediisocyanate (TDI), phenyl diisocyanate and methylenediphenyldiisocyanate (MDI) and aliphatic diisocyanates, such hexane diisocyanate, cyclohexane diisocyanate or isophoronediisocyanate (IPDI). Preferably, the diisocyanate is an aromatic diisocyanates, more preferably methylenediphenyldiisocyanate (MDI).

In a preferred embodiment of the invention, the soft blocks comprise or consist of soft blocks derived from poly(tretramethylene)glycol. This embodiment with soft blocks derived from poly(tretramethylene)glycol has the advantage that at a given amount of soft blocks present in the flame retardant thermoplastic polymer composition, the composition has a higher elongation, in combination with good retention of the modulus, compared to other soft blocks.

Suitably, the thermoplastic polymer in the flame retardant thermoplastic polymer composition according to the invention comprises a blend of an unmodified thermoplastic polyester and a thermoplastic polyester modified with chemically bonded soft blocks, wherein the soft blocks are present in a high amount, for example in the range of 35-75 wt.%, relative to the total weight of the thermoplastic polyester and the soft blocks.

With the term "unmodified thermoplastic polyester" is herein understood a thermoplastic polyester not modified with chemically bonded soft blocks. This in contrast to the thermoplastic polyester modified with chemically bonded soft blocks.

Thermoplastic polyester modified with chemically bonded soft blocks, wherein the soft blocks are present in such high amounts and consist of polymer segments derived from long chain aliphatic dicarboxylic acids, long chain aliphatic diols and soft polyesters, and the production thereof, are described, for example in Encyclopedia of Polymer Science and Technology, Vol. 12, page 107-109, whereas corresponding thermoplastic polyesters modified with soft blocks consisting of polymer segments derived from polyether glycols are described, for example, in Encyclopedia of Polymer Science and Technology, Vol. 12, page 75-85, and thermoplastic polyester modified with soft blocks derived from soft polycarbonates are described, for example, in EP-0868478-B1.

Thermoplastic polyesters modified with high amounts of chemically bonded soft blocks are also known as polyester elastomers.

Thermoplastic polyesters modified with 1-20 wt.% chemically bonded soft blocks, as used in the flame retardants thermoplastic polymer composition according to the invention, apart from being made by blending a thermoplastic polyester with such a polyester elastomer, can be made with similar processes as used for the polyester elastomers but adjusting the amount of the soft blocks to 1-20 wt.%.

In a preferred embodiment of the invention, the flame retardant thermoplastic polymer composition comprises a blend of an unmodified thermoplastic polyester and a copolyester-ester elastomer consisting of a semicrystalline thermoplastic polyester modified with soft blocks derived from a soft polyester chemically bonded to the thermoplastic polyester via urethane groups. This embodiment, comprising the blend of unmodified thermoplastic polyester and said copolyester-ester elastomer, has the advantage that at a given amount of soft blocks present in the flame retardant thermoplastic polymer composition, the composition has a better retention of flame retarding properties, compared to other compositions with different soft blocks, resulting in better flame retardancy ratings and/or allowing the use of less flame retardant for obtaining the same flame retardancy rating.

The soft blocks in the flame retardant thermoplastic polymer composition are preferably present in an amount of 2-15 wt.%, more preferably 5-12 wt.%, and most suitably in the range of 7.5-10 wt.%, relative to the weight of the thermoplastic polyester and the soft blocks. A higher minimum amount has the advantage that the elongation is further enhanced and/or more flame retardant may be present allowing for a better flame retardancy performance, whereas a lower maximum amount has the advantage that a higher modulus is obtained and retained at level comparable to or even above the modulus of the unmodified unfilled thermoplastic polyester.

Next to the thermoplastic polyester and the chemically bonded soft blocks, optionally in the form of a blend of unmodified thermoplastic polyester and copolyester elastomer, the flame retardant thermoplastic polymer composition may comprise other polymers including other thermoplastic polymers, such as thermoplastic polyamides, copolyamide elastomers and thermoplastic polycarbonates. If any other polymers are present, copolyamide elastomers are preferred. The advantage is that elongation-at break and thermal properties are better retained or even improved.

Preferably, the flame retardant thermoplastic polymer composition comprises the said other polymers in an amount of at most 50 wt.%, more preferably at most 25wt.%, 10 wt.% or even at most 5 wt.%, relative to the total weight of polymer components in the flame retardant thermoplastic polymer composition.

The halogen free flame retardant thermoplastic polymer composition according to the invention comprises a halogen free flame retardant system. This flame retardant system suitably comprises one or more flame retardant compounds chosen from the group consisting of nitrogen containing flame retardants, phosphor containing flame retardants, phosphor-and-nitrogen containing flame retardants and inorganic flame retardants. The halogen free flame retardant thermoplastic polymer composition is also preferably free of elementary phosphorous, such as red phosphorous. The flame retardant compounds chosen from the group mentioned above, as is already implicit from the word compound, explicitly exclude elementary phosphorous.

For these flame retardant compounds, any nitrogen and/or phosphor containing compound or inorganic compound may be chosen that is either a flame retardant when used alone and/or is a flame retardant synergist when used in combination with one or more other flame retardants. With a flame retardant synergist is herein understood a compound that can improve the flame retardancy properties of a thermoplastic polymer composition comprising one or more other flame retardants, and does so more effectively, i.e. with a larger effect, compared to the use of the same compound in a composition not comprising another flame retardant.

Suitable nitrogen containing and nitrogen-and-phosphor containing compounds that can be used as component (C) are described, for example in PCT/EP97/01664, DE-A-197 34 437, DE-A-197 37 72, and DE-A-196 14 424.

Suitably, the nitrogen containing flame retardant is chosen from the group consisting of glycouril, dicyandiamides, allantoines, triazines, guanamines, guanidines, cyanurates, isocyanurates, carbodiimide, and any derivatives, mixtures and salts thereof. Suitable salts of the nitrogen containing flame retardants are, for example, phosphates, borates and oxalates. The phosphates, will be dealt with in further detail under the nitrogen-and-phosphor containing compounds.

An example of a suitable guanamines is benzoguanamine. Examples of suitable isocyanurates include tris(hydroxyethyl)isocyanurate. Examples of suitable triazines are melamine and melamine based flame retardants, such as melamine cyanurate and condensation products of melamine. Condensations products of melamine are, for example, melem, melam and melon, as well as higher derivatives and mixtures thereof. These condensation products generally comprise mixtures of different oligomers of melamine. As a major component, melam, melem, and melon comprise respectively dimers, trimers and tetramers of melamine. Melamine condensation products can, for example, be obtained with the process described in WO-A-96/16948. Examples of melamine salts include melamine (poly)phosphates, melamine borates and melamine oxalates.

Preferably, the nitrogen containing flame retardant comprises melamine cyanurate, a condensation product of melamine, and/or a melamine salt, more preferably melamine cyanurate. The advantage of melamine cyanurate is that it has very good flame retardancy properties in thermoplastic polyesters, while improving the retention of properties under hot/humid conditions.

Melamine cyanurate is the reaction product of preferably equimolar amounts of melamine and cyanuric acid or isocyanuric acid. It can be made by conversion of aqueous solutions of the starting compounds at 90 to 100°C. Melamine cyanurate is commercially available as a white product with a particle size distribution wherein the particle size can vary over a large range, generally in the range of 0.1-100 µm. The melamine cyanurate that is used is preferable of small particle size, or can be easily dispersed into small particles in a polyester continuous phase during mixing. Suitably, the melamine cyanurate has a particle size distribution with a median particle size (d50) smaller than about 25 micrometer (µm) and larger than 0.5 µm; preferably the median particle size d50 is in the range of 1-15 µm, more preferably in the range of 2-10 µm. Very suitably, the median particle size d50 is in the range of 2.5-5 µm.

Suitable phosphor containing flame retardants, that can be used in the flame retarded thermoplastic polymer composition according to the invention are, for example, phosphates, phosphinates and phosphonates and oligomoric and polymeric derivatives thereof. Suitably, these phosphor containing flame retardants are present in the form of a metal salt.

Preferably, the phosphor containing flame retardant is a metal phosphinate consisting of one or more metal salts of phosphinic acids and/or diphosphinic acids or polymeric derivatives thereof.

Suitably, the metal phosphinate is a metal of a phosphinic acid of the formula
[R⁵R⁶P(O)O]⁻ₘM^{m+} (formula III) and/or a diphosphinic acid of the formula
[O(O)PR⁵-R⁷-PR⁶(O)O]²⁻ₘMₓ^{m+} (formula IV), and /or a polymer thereof, wherein
- R⁵ and R⁶ are equal or different substituents chosen from the group consisting of hydrogen, linear, branched and cyclic C1-C6 aliphatic groups, and aromatic groups,
- R⁷ is chosen from the group consisting of linear, branched and cyclic C1-C10 aliphatic groups and C6-C10 aromatic and aliphatic-aromatic groups,
- M is a metal chosen from the group consisting of Mg, Ca, Al, Sb, Sn, Ge, Ti, Zn, Fe, Zr, Ce, Bi, Sr, Mn, Li, Na, and K, and
- m, n and x are equal or different integers in the range of 1-4.

Suitable metal phosphinates that can be used as component B in the present invention are described for example in DE-A 2 252 258, DE-A 2 447 727, PCT/W-097/39053 and EP-0932643-B1. Preferred phosphinates are aluminium-, calcium- and zink-phosphinates, i.e. metal phosphinates wherein the metal M = Al, Ca, Zn respectively, and combinations thereof. Also preferred are metal phosphinates wherein R¹ and R² are the same or different and are equal to H, linear or branched C₁-C₆-alkyl groups, and/or phenyl. Particular preferably, R⁵ and R⁶ are the same or different and are chosen from the group consisting of hydrogen (H), methyl, ethyl, n-propyl, iso-propyl, n-butyl, tert.-butyl, n-pentyl and phenyl. More preferably, R⁵ and R⁶ are the same or different and are chosen from the group of substituents consisting of H, methyl and ethyl.

Also preferably R⁶ is chosen from the group consisting of methylene, ethylene, n-propylene, iso-propylene, n-butylene, tert.-butylene, n-pentylene, n-octylene, n-dodecylene, phenylene and naphthylene.

Highly preferably, the metal phosphinate comprises a hypophosphate and/or a C₁-C₂ dialkylphosphinate, more preferably Ca- hypophosphate and/or an Al-C₁-C₂ dialkylphosphinate, i.e. Al-dimethylphosphinate, Al-methylethylphosphinate and/or Al-diethylphosphinate.

Nitrogen-and-phosphor containing compounds that are suitable for use as flame retardant in the flame retarded polyester composition in the light-reflecting element according to the invention include salts of the nitrogen containing compounds and phosphor containing compounds mentioned here above.

Suitably, the nitrogen/phosphor containing flame retardant is a reaction product of ammonia, melamine and/or a condensation product thereof with phosphoric acid or a polyphosphate modification thereof. With the reaction product of melamine /or a condensation product thereof with phosphoric acid and are herein understood compounds, which result from the reaction of melamine or a condensation products of melamine are, for example, melem, melam and melon, with a phosphoric acid.

Examples of reaction products of melamine and/or a condensation product thereof with phosphoric acid or a polyphosphate modification thereof include dimelaminephosphate, dimelamine pyrophosphate, melamine phosphate, melamine polyphosphate, melamine pyrophosphate, melamine polyphosphate, melam polyphosphate, melon polyphosphate and melem polyphosphate, as are described for example in PCT/WO 98/39306.

Suitable examples of reaction products of ammonia with phosphoric acid or a polyphosphate modification thereof include ammonium hydrogenphosphate, ammonium dihydrogenphosphate and ammonium polyphosphate.

More preferably the nitrogen/phosphor containing flame retardant comprises ammonium polyphosphate and/or melamine polyphosphate, and even more preferably melamine polyphosphate.

Suitably inorganic compounds that can be used in the flame retardant system in the composition according to the invention comprise compounds chosen from the group consisting of basic and amphoteric oxides, hydroxides, carbonates, silicates, borates, stannates, mixed oxide-hydroxides, oxide-hydroxide-carbonates, hydroxide-silicates and hydroxide-borates, and mixtures thereof.

Preferred metal oxides are iron oxide, magnesium oxide, calcium oxide, aluminium oxide, zink oxide, manganese oxide and stannum oxide.

Preferred hydroxides are aluminium hydroxide, bohmite, magnesium hydroxide, hydrotalcite, dihydrotalcite, hydrocalumite, calcium hydroxide, zink hydroxide, stannum oxidehydrate and manganese hydroxide.

Preferably, the inorganic compound comprises, or even is, a compound chosen from the group consisting of zink borate, basic zink silicate and zink stannate, magnesium hydroxide, zink oxide, zinc sulphide, hydrotalcite, dihydrotalcite and bohmite, and mixtures thereof, more preferably zink borate, zink sulphide, zink oxide, magnesiumhydroxide, hydrotalcite and dihydrotalcite, and mixtures thereof.

Most preferably, the inorganic compound comprises, or even is, zink borate.

Preferably the flame retardant system comprises a nitrogen and/or a nitrogen-and-phosphor containing flame retardant, more preferably a melamine based flame retardant chosen from the group consisting of melamine cyanurate, melamine condensation products and melamine polyphosphates, and most preferably melamine cyanurate.

The flame retardant thermoplastic polymer composition according to the invention can comprise the flame retardant system consisting of one or more flame retardant compounds in a total amount varying over a large range. Suitably the amount is at least 15 wt.%, relative to the total weight of the composition, although a lower amount may be used for applications where requirements for flame retardancy are less high. Preferably, the total amount of the one or more flame retardant compounds of which the flame retardant system consists, is at least 20 wt.%, or at least 25wt.%, 30 wt.%, 35 wt.% or even 40 wt.%, whereas the amount may be as high as 50, or 55 or 60 wt.%, and even higher. The higher the amount, the more critical polyester compositions generally are in terms of mechanical properties, and the greater impact the soft blocks according to the invention have on the mechanical properties.

In a preferred embodiment of the invention the flame retardant thermoplastic polymer composition comprises a total amount of 20-60 wt.%, relative to the total weight of the flame retardant thermoplastic polymer composition, of one or more flame retardant compounds chosen from the group consisting of nitrogen containing flame retardants, phosphor containing flame retardants, phosphor-and-nitrogen containing flame retardants and inorganic flame retardants.

More preferably, the said total amount is 30-55 wt.%, even more preferably 40-50 wt.%.

Also more preferably, in the said total amount of 20-60 wt.%, respectively 30-55 wt.% and 40-50 wt.%, is comprised a nitrogen containing flame retardant, still more preferably a melamine based flame retardant, and most preferably melamine cyanurate.

Suitably, the nitrogen containing flame retardant, respectively the melamine based flame retardant and melamine cyanurate, makes up for at least 20wt.%, preferably at least 40 wt.%, 60 wt.% or even 75 wt.%, and most preferably makes up for 90-100 wt% of the total amount of the said one or more flame retardant compounds. The wt.% herein are relative to the total weight of the said one or more flame retardant compounds.

In addition to the constituents mentioned here above, i.e. the polymeric components and the flame retardant system, the flame retarded thermoplastic composition according to the invention may further comprise one or more auxiliary additives, such as fillers, reinforcing agents, stabilizers, processing aids, colouring agents.

The fillers, reinforcing agents and other auxiliary additives that can be used in the flame retarded polyester composition may be any such compound conventionally used in flame retardant thermoplastic compositions.

Reinforcing agents generally consist of inorganic fibrous materials. Suitable reinforcing agents include glass fibers and carbon fibres. In the flame retardant thermoplastic polymer composition according to the invention, reinforcing agents may be present in an amount varying over a large range. Preferably, the reinforcing agents are present in an amount of less than 30 wt.%, more preferably 0-20 wt.% and most preferably 0-10 wt.%, relative to the total weight of the flame retardant thermoplastic polymer composition.

Fillers are generally powder like material consisting of small particles, typically with a particle size below 1 mm, preferably below 0.1 mm, more preferably below 10 µm. Suitable examples of fillers are magnesium carbonate, kaolin, quartz, calcium carbonate.

In the flame retardant thermoplastic polymer composition according to the invention, fillers may be present in an amount varying over a large range. Preferably, the fillers are present in an amount of less than 30 wt.%, more preferably 0-20 wt.% and most preferably 0-10 wt.%, relative to the total weight of the flame retardant thermoplastic polymer composition.

The other auxiliary additives are suitably present in a total amount of 0-20 wt.%, more preferably 0.01-10 wt.%, or 0.1-5 wt.%, and most preferably 1-3 wt.%, relative to the total weight of the flame retardant thermoplastic polymer composition

Suitable stabilizers include, for example, trans-esterification inhibitors, UV-stabilizers, heat stabilizers and anti-oxidants, as well as combined thermo-oxidative stabilizers. Additives suitable as heat stabilizer and/or and anti-oxidant are, for example, hindered phenols, hydrochinones. Suitable UV-stabilisers are, for example, benzophenone, benzotriazoles, resorcinols, and salycilates. Stabilizers are suitably present in a total amount of 0-5 wt.%, preferably 0.01-3 wt.%, or 0.05-2 wt.%, and most preferably 0.1-1 wt.%, relative to the total weight of the flame retardant thermoplastic polymer composition.

Suitable processing aids include mould release agents, such as fatty acids and derivatives thereof and including stearic acid, stearic alcohol and stearic amides, lubricants or viscosity reducers, and nucleating agents, such as talcum. These additives are suitably used in a total amount of 0-3 wt.%, preferably 0.01-2 wt.%, more preferably 0.1-1 wt.%, relative to the total weight of the flame retardant thermoplastic polymer composition.

Suitable colouring agents include pigments, such as titanium dioxide and carbon black, and dies, such as nigrosine. Colouring agents are also are suitably used in a total amount of 0-3 wt.%, preferably 0.01-2 wt.%, more preferably 0.1-1 wt.%, relative to the total weight of the flame retardant thermoplastic polymer composition.

In a specific embodiment of the invention, the flame retarded thermoplastic polymer composition consists of:
A) a thermoplastic polyester and soft blocks chemically bonded to the thermoplastic polyester, in an amount of 1-20 wt.%, relative to the total weight of the thermoplastic polyester and the soft blocks, and optionally
B) one or more other polymeric components, wherein (A) is present in a amount of at least 50 wt.% relative to the total weight of (A) and (B),
C) between 15 and 60 wt.% of a halogen free flame retardant system comprising one or more flame retardant compounds chosen from the group consisting of nitrogen containing flame retardants, phosphor containing flame retardants, phosphor-and-nitrogen containing flame retardants and inorganic flame retardants,
D) 0-20 wt.% of reinforcing agents,
E) 0-20 wt.% of one or more fillers, and
F) 0-20 wt.% of one or more other auxiliary additives,
wherein the weight percentages of (C), (D), (E) and (F) are relative to the total weight of the flame retarded thermoplastic polymer composition, and wherein the sum of (A)-(F) is 100 %.

In a preferred embodiment of the invention, the flame retarded thermoplastic polymer composition consists of:
A) a thermoplastic polyester and soft blocks chemically bonded to the thermoplastic polyester, in an amount of 1-20 wt.%, relative to the total weight of the thermoplastic polyester and the soft blocks, and optionally
B) one or more other polymeric components, wherein (A) is present in a amount of at least 50 wt.% relative to the total weight of (A) and (B),
C) between 20 and 60 wt.% of a halogen free flame retardant system comprising a nitrogen containing flame retardant in an amount of at least 50 wt.%, relative to the total weight of the flame retardant system,
D) 0-10 wt.% of reinforcing agents,
E) 0-10 wt.% of one or more fillers, and
F) 0-10 wt.% of one or more other auxiliary additives,
wherein the weight percentages of (C), (D), (E) and (F) are relative to the total weight of the flame retarded thermoplastic polymer composition, and wherein the sum of (A)-(F) is 100 %.

In a more preferred embodiment of the invention, the flame retarded thermoplastic polymer composition consists of:
A) a thermoplastic polyester and soft blocks derived from polytetramethylene glycol (PTMG) chemically bonded to the thermoplastic polyester and/or derived from a soft polyester chemically bonded by urethane linkages to the thermoplastic polyester, in an amount of 1-20 wt.%, relative to the total weight of the thermoplastic polyester and the soft blocks, and optionally
B) one or more other polymeric components, wherein (A) is present in a amount of at least 50 wt.% relative to the total weight of (A) and (B),
C) between 20 and 60 wt.% of a halogen free flame retardant system comprising a melamine based flame retardant in an amount of at least 50 wt.%, relative to the total weight of the flame retardant system,
D) 0-10 wt.% of reinforcing agents,
E) 0-10 wt.% of one or more fillers, and
F) 0-10 wt.% of one or more other auxiliary additives,
wherein the weight percentages of (C), (D), (E) and (F) are relative to the total weight of the flame retarded thermoplastic polymer composition, and wherein the sum of (A)-(F) is 100 %.

The flame retarded thermoplastic polymer composition according to the invention can be made using conventional methods. For the preparation one can suitably use melt-mixing equipment, such as single screw extruders, double screw extruders, Brabender mixers and Banburry kneaders.

The inventive compositions are very suited for making moulded parts by means of various moulding techniques, including injection moulding, extrusion moulding and/or overmoulding, in particular for the preparation of rigid structural parts used in electric, electronic and automotive application. For these applications, the good flame retardancy properties in combination with the relatively high elongation and modulus are very advantageous.

The invention therefore also relates to the use of the flame retardant thermoplastic polymer composition according to the invention in a moulding process for making an injection moulded part, an extrusion moulded part or an overmoulded part .

The invention also relates to a shaping process for making a moulded part comprising a step wherein the moulded part is shaped by injection moulding or extrusion moulding of a composition according to the invention, or any preferred embodiment thereof, or overmoulding of a composition according to the invention, or any preferred embodiment thereof over a core part.

The invention also relates to fibres and films made from a flame retardant composition according to the invention, and to moulded parts at least partly made from a flame retardant composition according to the invention, or any preferred embodiment thereof, preferably being a an injection moulded part or an extrusion moulded part.

Suitably, the moulded part is an electrical part, electronic part, or an automotive part. i.e. moulded parts that are particularly suited for being used in electrical, electronic, or automotive applications, respectively. Suitable applications are in particular connectors, lamp bases and lamp houlders, plugs and sockets, bobbin carrier, housings for condensators, and housings for switchgears, for example circuit breakers.

The moulded part can also suitably be a housing for office automation apparatuses and electrical household appliances, and parts for use in public transport such as boats, busses, trains and airplanes.

The invention is further illustrated with the following examples and comparative experiments.

### Materials

| | |
|---|---|
| PBT | Polybutyleneterephthalate; |
| Rubber | Lotader AX8900, an ethylene-methacrylate-glycydilmethacrylate copolymer; |
| Pripol | Pripol 1007, C36-dimer fatty acid; |
| PTMO | Polytetramethylene glycol, number average molecular weight (Mn) 1000, Mw/Mn about 2; |
| TPE-E | Polyesterester elastomer consisting of 35 wt.% soft segments consisting of butylene adipate linked with 5 wt.% MDI-based urethane groups to 60 wt.% of hard segments consisting of polybutyleneterephthalate segments; |
| MC50 | Melamine cyanurate, particle size distribution with a d50 of about 4.2 µm and a d99 of about 45 µm; |
| Stabilizer | Irganox 1330. |

### Preparation of PBT

A 50 L reactor equipped with stirrer and condenser was charged with 18730 g dimethylterephthalate, 10250 g 1,4-butanediol and 85.0 170 + 42.5 = 212.5 g of a titanium tetra n-butoxide catalyst solution in 1,4-butanediol (40 mg catalyst per gram solution). After 3 times flushing of the reactor with nitrogen, the reactor content was heated gradually under stirring and atmospheric pressure within one hour to a temperature of 150°C, kept at this temperature for half an hour, and subsequently heated further within 2 hours to a temperature of 235°C. The thus obtained transesterified product was then further polymerised at 240°C under reduced pressure (50-100 Pa) for 120 minutes at a stirring speed of 20 RPM. Than 70 g Stabilizer was added, corresponding with an amount of about 0.25 wt.% relative to the weight of the polymerized product. The polymerised product was extruded from the reactor, under nitrogen pressure, in the form of a strand, cooled in water and pelletized in a pelletizer.

### Soft block modification of the polyesters

For the preparation of the PBT polymers modified with soft blocks chemically bonded to the thermoplastic polyester, the same procedure as described above was applied, except that an amount of Pripol respectively PTMO was added. The amounts used were 4 wt.%, respectively 7 wt.% and 10 wt.%, relative to the total weight of dimethylterephthalate and 1,4-butanediol. The amount of the Pripol or PTMO in the resulting polymerised product was verified to be equal to or close to 4 wt.%, 7 wt.%, respectively 10 wt.%, relative to the total weight of the polymerised product.

### Compounding

For the preparations of moulding compositions, ingredients were compounded in ratios as indicated in Table 1 and 2. The moulding compositions were prepared by melt-blending the modified and/or unmodified thermoplastic polyesters, with the flame retardant components, stabilizer and optionally other components on a Berstorf ZE25 extruder equipped with a Cabot screw with the following settings: screw speed 600 rpm, throughput 30 kg/hr, and melt temperature regulated at 240°C. The resulting melt was extruded from the extruder through a die, cooled and granulated. The granules obtained by compounding in the extruder were dried for 24 hours at 120°C, prior to further use.

### Moulding of test samples

Test samples for testing the mechanical properties and the flame retardancy properties were prepared on an injection-moulding machine of type Engel 80 A. For the injection moulding set temperatures of 235-245°C were used. The mould temperature was 90°C. Cycle times for the test specimens were about 50 sec..

### Test methods

Mechanical properties: Tensile tests were performed according to ISO 527/1A using dry-as-moulded samples. Dimensions of tensile test specimens: thickness 4 mm

Flame retardancy: sample preparation and testing was performed according to UL-94-V, respectively; thickness of the test specimens was 1.6 mm.

Compounds with the compositions of Comparative Experiments A-D (CE-A - CE-D) and Examples I-XII (EX-I - EX-XII) according to the invention and were prepared and tested as described above. The compositions and test results are presented in Tables 1 and 2.

**Table 1. Compositions and test results for Comparative Experiments A-D (CE-A - CE-D) and Examples I-IV (EX-I- EX-IV)**

| | CE-A | CE-B | CE-C | CE-D | EX-I | EX-II | EX-III | EX-IV |
|---|---|---|---|---|---|---|---|---|
| PBT | 100 | 60 | 57 | 54 | | | | |
| Rubber | | | 3 | 6 | | | | |
| PBT + 4% Pripol | | | | | 60 | | | |
| PBT + 7% Pripol | | | | | | 60 | | |
| PBT + 10% Pripol | | | | | | | 60 | 5 |
| MC50 | | 40 | 40 | 40 | 40 | 40 | 40 | 45 |
| | | | | | | | | |
| (%soft blocks) | (0) | (0) | (5) | (10) | (4) | (7) | (10) | (10) |
| | | | | | | | | |
| UL-94-V results | | | | | | | | |
| V0/V2 a) | n.c. | 10*V0 | n.c. | n.c. | 9/1 | 10/0 | 8/2 | 10/0 |
| V0/V2 b) | n.c. | 10*V0 | n.c. | n.c. | 6/4 | 9/1 | 8/2 | 10/0 |
| Rating c) | n.c. | V0 | n.c. | n.c. | V2 | V0 | V2 | V0 |
| Mechanical properties | | | | | | | | |
| E-modulus (MPa) | 2720 | 4618 | 4014 | 3663 | 4075 | 3529 | 2869 | 3106 |
| Stress at break (MPa) | 54.9 | 35,4 | 38.8 | 37.3 | 37.6 | 37.5 | 33.6 | 34.3 |
| Elongation-at-break(%) | 15.4 | 0.9 | 1.11 | 1.21 | 1.1 | 1.4 | 1.78 | 1.61 |
| Impact properties | | | | | | | | |
| Charpy notched | | 1.23 | 1.69 | 1.78 | 1.24 | 1.38 | 1.66 | 1.19 |
| Charpy unnotched | | 9.11 | 11.3 | 12.59 | 10.2 | 9.93 | 10.43 | 9.19 |

| | | | | | | | | |
|---|---|---|---|---|---|---|---|---|
| UL-94-V a) 48 h, 23°C, 50 % RH; b) 168 h, 70°C; c) rating n.c. = not classified. | | | | | | | | |

**Table 2. Compositions and test results for Examples V-XII (EX-V - EX-XII)**

| | EX-V | EX-VI | EX-VII | EX-VIII | EX-IX | EX-X | EX-XII | EX-XII |
|---|---|---|---|---|---|---|---|---|
| PBT | | | | | | | 40 | 30 |
| PBT+ 4% PTMO | 60 | | | | | | | |
| PBT+ 7% PTMO | | 60 | 55 | | | | | |
| PBT + 10% PTMO | | | | 60 | 55 | 50 | | |
| TPE-E | | | | | | | 20 | 30 |
| MC50 | 40 | 40 | 45 | 40 | 45 | 50 | 40 | 40 |
| | | | | | | | | |
| (%soft blocks) | (4) | (7) | (7) | (10) | (10) | (10) | (11.7) | (17.5) |
| | | | | | | | | |
| UL-94-V results | | | | | | | | |
| V0/V2 a) | 10/0 | 15/0 | 10/0 | 10/0 | 10/0 | 10/0 | 10*V0 | 10*V0 |
| V0/V2 b) | 8/2 | 9/1 | 10/0 | 8/2 | 10/0 | 10/0 | 10*V0 | 10*V0 |
| Rating | V2 | V0 | V0 | V2 | V0 | V0 | V0 | V0 |
| | | | | | | | | |
| E-modulus (MPa) | 3990 | 2710 | 2874 | 2400 | 2854 | 2832 | 2740 | 2110 |
| Stress at break (MPa) | 34.2 | 32.7 | 29.5 | 30.5 | 27.8 | 28.0 | 30 | 25 |
| Elongation-at-break(%) | 1.39 | 2.24 | 1.52 | 2.6 | 1.73 | 1.42 | 1.65 | 2.1 |

| | | | | | | | | |
|---|---|---|---|---|---|---|---|---|
| UL-94-V a) 48 h, 23°C, 50 % RH; b) 168 h, 70°C. | | | | | | | | |

## Claims

1. Halogen free flame retardant thermoplastic polymer composition comprising a thermoplastic polyester and a halogen free flame retardant system, wherein the thermoplastic polymer composition comprises an amount of 1-20 wt.% of soft blocks chemically bonded to the thermoplastic polyester, wherein the wt.% is relative to the total weight of the thermoplastic polyester and the soft blocks.

2. Halogen free flame retardant thermoplastic polymer composition according to claim 1, wherein the thermoplastic polyester is a semicrystalline polyester with a melting point of at least 180°C, and wherein the soft blocks form an amorphous phase having a glass transition temperature of at most 20°C.

3. Halogen free flame retardant thermoplastic polymer composition according to claim 1 or 2, wherein the soft blocks consist of polymer segments derived from a compound chosen from the group consisting of long chain aliphatic dicarboxylic acids, long chain aliphatic diols, long chain aliphatic diamines, polyether glycols, polyether diamines, soft polyesters and soft polycarbonates, and mixtures thereof.

4. Halogen free flame retardant thermoplastic polymer composition according to any of claims 1-3, wherein soft blocks are derived from polytetramethylene glycol (PTMG) chemically bonded to the thermoplastic polyester and/or derived from a soft polyester chemically bonded by urethane linkages to the thermoplastic polyester.

5. Halogen free flame retardant thermoplastic polymer composition according to any of claims 1-4, wherein the soft blocks are present in an amount of 2-15 wt.%, relative to the weight of the thermoplastic polyester and the soft blocks.

6. Halogen free flame retardant thermoplastic polymer composition according to any of claims 1-5, wherein the halogen free flame retardant system comprises one or more flame retardants chosen from the group consisting of inorganic flame retardants, nitrogen containing flame retardants, phosphor containing flame retardants and phosphor-and-nitrogen containing flame retardants in a total amount of 20-60 wt.%, relative to the total weight of the halogen free flame retardant thermoplastic polymer composition.

7. Halogen free flame retardant thermoplastic polymer composition according to any of claims 1-6, wherein the composition comprises next to the thermoplastic polyester, the soft blocks chemically bonded to the thermoplastic polyester, and the halogen free flame retardant system one or more other polymeric components and/or at least one compound chosen from the group of fillers, reinforcing agents and other additives.

8. Use of a halogen free flame retardant thermoplastic polymer composition according to any of claims 1-7 for making fibres, films or injection or extrusion moulded parts.

9. Fibres and films made of a halogen free flame retardant thermoplastic polymer composition according to any of claims 1-7.

10. Moulded part, at least partially consisting of a halogen free flame retardant thermoplastic polymer composition according to any of claims 1-7.

11. Moulded part according to claim 10, wherein the moulded part is an electrical part, electronic part, an automotive part, a housing for office automation apparatuses or electrical household appliances, or a part for use in public transport.
